# EUROPÄISCHE PATENTSCHRIFT

(11) **EP 0 440 033 B1**
(45) Veröffentlichungstag und Bekanntmachung des Hinweises auf die Patenterteilung: **05.01.1994**
(21) Anmeldenummer: 91100382.0
(22) Anmeldetag: 15.01.1991
(51) Int. Cl.: A01G 31/00, A01G 31/02

(54) **Vorrichtung für hydroponische Verfahren im Pflanzenbau aus textilem vliesartigen Material**
Device for hydroponic processing in plant culture comprising non woven textile material
Dispositif pour procédé hydroponique dans la culture de plantes comprenant une matière textile non-tissée

(30) Priorität: 19.01.1990 DD 337213
(43) Veröffentlichungstag der Anmeldung: 07.08.1991
(73) Patentinhaber: Schröder, Fritz-Gerald, Dr. Professor, D-06686 Meuchen (DE); Sommer, Klaus, D-09366 Stollberg-Mitteldorf (DE); Staerke, Michael, Dr., D-99096 Erfurt (DE)
(72) Erfinder: Schröder, Fritz-Gerald, Dr. Professor, D-06686 Meuchen (DE); Sommer, Klaus, D-09366 Stollberg-Mitteldorf (DE); Staerke, Michael, Dr., D-99096 Erfurt (DE)

(56) Entgegenhaltungen:
- EP-A- 0 117 766
- EP-A- 0 172 060
- EP-A- 0 299 067
- FR-A- 2 641 442

## Beschreibung

Die Erfindung betrifft eine textile vliesartige Schicht, welche als Wurzelstandort von Kulturpflanzen eingesetzt werden kann und zur Wasser- und Nährstoffversorgung der Pflanzen in hydroponischen Anzuchtverfahren Verwendung findet.

Aus dem Stand der Technik ist es seit geraumer Zeit bekannt, poröse, saugfähige und damit auch flüssigkeitsspeichernde und flüssigkeitsleitende Materialien zur Versorgung von Kulturpflanzen in Topf- oder Substratballenkultur einzusetzen.
So wird in der CH PS 542 571 der Int. Cl. A 01 G 27/00 eine Bewässerungsmatte aus Vlies oder vliesartigen Material vorgeschlagen, welche aus unterschiedlichen, übereinander angeordneten Schichten besteht, wobei die untere Schicht schwer wasserdurchlässig ist.
Zur Versorgung der auf der oberen Schicht aufgesetzten Topfpflanzen mit dem zum Pflanzenwachstum notwendigen Wasser, werden erfindungsgemäß zwischen den beiden Schichten Wasserzuführungsschläuche aus Kunststoff angeordnet, wobei die beiden Vliesschichten nachfolgend mittels üblicher thermischer Verfahren miteinander verbunden werden können.
Durch die Kapillarität des eingesetzten Vliesstoffes soll eine gleichmäßige Wasserversorgung der Pflanzen erreicht werden.
Nachteilig bei dieser Lösung ist der hohe Materialeinsatz, da die Vliesstoffschichten relativ stark ausgebildet sind aber auch die Tatsache, daß die Wurzeln der aufgesetzten Topfpflanzen zum Durchwurzeln der Matte neigen, da sie bestrebt sind auf diese Art und Weise die Flüssigkeitsaufnahme zu verbessern. Durch das Durchwurzeln kommt es zu Wachstumsstockungen, sofern die Matte zur Aufzucht von Jungpflanzen Verwendung findet, da beim notwendigen Umsetzen der Pflanzen, Verletzungen der Wurzeln nicht zu vermeiden sind. Auch bereiten die in diesen Stoffen verbleibenen Pflanzenreste Schwierigkeiten bei der Desinfektion dieser Matten, was wiederum eine Wiederverwendung aus pflanzenbaulicher Sicht fraglich erscheinen läßt.
Zur gleichmäßigen Verteilung der Nährflüssigkeit wird bei derartigen Einrichtungen eine Flüssigkeitsmenge benötigt, welche über der, der Pflanzenaufnahme liegt, d.h. es wird mit Nährlösungsüberschuß gefahren, was aufwendige Pumpsysteme zur Rückführung der nicht benötigten Nährlösungsmengen bedingt.
Bekannt ist weiterhin der Einsatz von Glasfasermatten zur Unterstützung der Wasserverteilung in geschlossenen oder offenen Anzuchtsystemen (z.B. Deutscher Gartenbau 45/1988 S. 2788 - 2783).
Neben den relativ hohen Kosten dieser Materialien, zeichnen sich Glasfasermatten durch ein begrenztes Flüssigkeitsspeichervermögen aus. Auch bereitet die Verarbeitung derartiger Materialien aus ansich bekannten Gründen Schwierigkeiten.
Kapillarmatten zur Bewässerung von Pflanzenkulturen aus vliesartigen Materialien sind gleichfalls bekannt, wobei hier insbesondere der Wasserverteileffekt und die hydraulische Leitfähigkeit eine wichtige Rolle spielen.
Da jedoch auch die Wurzeln mit Sauerstoff ausreichend versorgt werden müssen, ist die Lufthaltekapazität derartiger Materialien ein nicht unwesentlicher Faktor bei der Beurteilung über die Eignung derartiger Materialien. Bei den bekannten Glasfasermatten werden jedoch nur geringe Gashaltewerte erreicht, da auf Grund der Faserstruktur relativ wenig kapillare Hohlräume vorhanden sind.
Die Eigenschaften bekannter Vliese, welche zur An- und Aufzucht von Pflanzen geeignet erscheinen, werden insbesondere durch die Faserlänge, Faserfeinheit, der Entfernung zwischen den Fasern, der Faseroberfläche, der Faserbeschichtung und der Art der Faserbindung beeinflußt.

Das Ziel der Erfindung besteht darin, eine kostengünstige textile Schicht als Wurzelraum zur Flüssigkeits- und Nährstoffversorgung von Kulturpflanzen in hydroponischen Anzuchtverfahren zu finden, welche eine ausreichende Flüssigkeitsverteilung garantiert und dabei gut verarbeitbar ist. Dabei ist anzustreben, den Materialeinsatz und den Aufwand zur Anlage einer derartigen Vorrichtung möglichst minimal zu halten und trotzdem ein optimales Pflanzenwachstum zu garantieren.

Aufgabe ist es, ein textiles Material zur optimalen Flüssigkeits- und Nährstoffversorgung von Kulturpflanzen in substratarmen Anzuchtverfahren zu finden, welches sich durch ausreichend mechanische Festigkeit, einen hohen Flüssigkeitstransportwert sowie einer hohen Flüssigkeitsspeicherkapazität auszeichnet.

Erfindungsgemäß wird die Aufgabe dadurch gelöst,
daß eine textile vliesartige Schicht als Pflanzenstandort eingesetzt wird, welche die Aufgaben der Flüssigkeits- und Nährstoffversorgung von Kulturpflanzen in substratarmen Anzuchtverfahren realisiert. Zum Einsatz gelangt ein ohne chemische Bindemittel verfestigtes Polyesterwirbelfaservlies, mit isotroper Faserlage oder ein gleichartiger Viskosefaservliesstoff, welcher durch eine Flächenmasse von 30 g/m² bis 90 g/m², einer Untersinkdauer von 6 bis 10 s, einer Streifenreißkraft von 25 bis 150 N bei einer Vliesstoffdicke von 0,3 bis 0,9 mm gekennzeichnet ist.
Die eingesetzte Faserlänge beträgt 10 bis 58 mm, bei einer Faserfeinheit von 0,15 bis 0,38 tex und einer Flüssigkeitsspeicherkapazität des Vlieses von 0,8 bis 2,5 l/m².
Der Flüssigkeitstransportwert liegt im Bereich von 35 bis 90 gmm.
Der Einsatz des Vlieses soll vorzugsweise bei hydroponischen Verfahren in Gewächshäusern erfolgen, wo das Vlies flächig entlang der Pflanzenreihen ausgelegt wird. Zum Einsatz als Wurzelstandort ist es vorteilhaft, das Vlies mittels an sich bekannter Verfahren dunkel, vorzugsweise schwarz, einzufärben.
Das eingesetzte Vlies zeichnet sich durch eine gute Flüssigkeitsspeicherfähigkeit und - leitfähigkeit aus, wodurch eine optimale Versorgung der Pflanzen ohne große Substratmengen ermöglicht wird.
Trotz des geringen Substrataufwandes, gebildet aus Vlies und minimierten Nährlösungsmengen, war es überraschend und nicht zu erwarten, daß sich die Pflanzen optimal entwickeln und über das Vlies ausreichend mit Wasser- und Nährstoffen versorgt werden, so daß ein Ertragsniveau erreicht werden konnte, das zumindest dem entsprach, welches durch herkömmliche Anlagen realisiert werden konnte. Neben diesem wesentlichen Vorteil der erfindungsgemäßen Einrichtung traten folgende weitere Vorteile auf:
- Kostenersparnis gegenüber herkömmlichen Verfahren um ca. 50 bis 60 % insbesondere durch
   . Einsparung von Material bzw. die Möglichkeit zur Wiederverwendung derartiger Materialien
   . Einsparung von Arbeitszeit durch unkompliziertes Anlegen der Anzuchtflächen
   . Minimierung der notwendigen Nährlösungsmengen zur Versorgung der Pflanzen
   . gleichmäßige Verteilung auf der gesamten Anzuchtfläche auf der Grundlage der hydraulischen Leitfähigkeit des Vlieses
- günstige Ausnutzung der verfügbaren Wärmeenergie zur Temperierung der Flüssigkeit unter Nutzung der geringen Schichtdicke des Vlieses, verbunden mit dem Effekt, daß innerhalb der Flüssigkeit kaum ein Temperaturgefälle auftritt.
- gartenbaulich unkomplizierte Anpassung der Einrichtung an unterschiedliche Kulturpflanzenarten und damit verbundene unterschiedliche, optimale Pflanzenabstände.
- gunstige Möglichkeiten zur phytosanitären Trennung einzelner Kulturpflanzenabschnitte zur Reduzierung der möglichen Verteilung von Krankheitserregern durch die Flüssigkeit.
- Minimierung des benötigten Substrataufwandes und damit verbundene Reduzierung des Aufwandes für eine ökologisch vertretbare Entsorgung.

Es hat sich gezeigt, daß das erfindungsgemäße Vlies durch eine vorteilhafte Kombination textiler und mechanischer Parameter besonders gut zur An- und Aufzucht von Pflanzen in hydroponischen Anlagen geeignet ist.

Nachfolgend wird die erfindungsgemäße Vorrichtung anhand zweier Ausführungsbeispiele näher veschrieben:

### Beispiel 1:

Eine Vorrichtung für hydroponische Verfahren im Pflanzenbau, vorzugsweise eingesetzt zur Anzucht von Tomaten-, Gurken- , Paprika- oder Zierpflanzen in Gewächshäusern, besteht aus einem hydrodynamisch verfestigten Polyesterfaservliesstoff mit isotroper Faserlage und einer Flächenmasse von 85 g/m², einer Untersinkdauer von 10 s einer Streifenreißkraft von 120 bis 150 N bei einer Vliesstoffdicke von 0,5 bis 0,7 mm, einer Faserlänge von 58 mm, einer Feinheit von 0,36 tex, einer Flüssigkeitsspeicherfähigkeit von 1 l/m² sowie einem Wassertransportwert von 40 gmm.
Die Pflanzen weisen einen pflanzenbaulich erforderlichen Abstand von 0,3 bis 0,6 m in der Anzuchtreihe auf. Als Wurzelraum kommt das beschriebene Vlies zur Anwendung, welches sich zwischen einer unteren wasserundurchlässigen Schicht und einer oberen perforierten und mit Pflanzöffnungen versehenen Folienschicht befindet.
Das Grundbeet weist ein Quergefälle von 1 bis 2 % auf.
Durch die erfindungsgemäße Anordnung konnte ein gesundes kräftiges Wurzelwachstum erzielt und ein Ertrag erreicht werden, welcher nicht geringer war als der Ertrag, welcher mittels hydroponischer Verfahren im bekannten NFT - Verfahren (engl. Nutrient-Film-Technique) erreicht werden konnte.

### Beispiel 2:

Eine Vorrichtung für hydroponische Verfahren im Pflanzenbau, vorzugsweise zur Jungpflanzenanzucht und Kultur von Pflanzen mit kurzer Vegetationszeit (z.B. Kopfsalat) besteht aus einem Viskosefaservliesstoff mit einer Flächenmasse von 35 bis 40 g/m², gekennzeichnet durch eine Untersinkdauer von 6,2 bis 7 s, einer Streifenreißkraft von 25 bis 40 N bei einer Vliesstoffdicke von 0,3 bis 0,5 mm, mit einer Faserlänge von 10 bis 25 mm und einer Feinheit von 0,35 bis 0,36 tex, einer Flüssigkeitsspeicherkapazität von 2,5 l/m² und einem Wassertransportwert von 70 gmm.
Die Pflanzen sind in einem Pflanzabstand von 0,25 mm angeordnet. Als Wurzelraum dient das beschriebene Vlies, welches sich zwischen einer unteren wasserundurchlässigen Schicht und einer oberen perforierten Schicht befindet. Die obere Schicht wird vorzugsweise aus weißer Folie mit Pflanzöffnungen oder aus einer Schicht Polysterolflocken gebildet.
Bei der Jungpflanzenanzucht kann auch auf die obere Schicht verzichtet werden.
Das Viskosefaservlies ist verrottbar, so daß keine Wurzelschäden beim Rücken oder Versetzen am Ende der Vegetationsphase entstehen.
Substratabfall entsteht beim Einsatz von Viskosefaservliesstoff nicht.
Das Grundbeet besitzt ein Quergefälle von 1 bis 2 %. Die Pflanzen entwickeln sich aufgrund der günstigen Nährstoffaufnahme durch die Pflanzenwurzeln sehr gut und weisen eine ausgezeichnete Qualität auf.
Trotz erheblich geringerem Materialeinsatz konnten keine pflanzenbauliche Wachstumsmängel, an den Pflanzen, in der Aufzuchtphase beobachtet werden.

## Patentansprüche

1. Vorrichtung für hydroponische Verfahren im Pflanzenbau, aus textilem vliesartigen Material, dadurch gekennzeichnet, daß ein ohne chemische Bindemittel verfestigter Faservliesstoff mit einer Flächenmasse von 30 bis 90 g/m², einer Untersinkdauer von 6 bis 10 s, einer Streifenreißkraft von 25 bis 150 N, einer Faserfeinheit von 0,15 bis 0,38 tex, einer Flüssigkeitsspeicherkapazität von 0,8 bis 2,5 l/m² sowie einem Wassertransportportwert von 35 bis 90 gmm als Pflanzenstandort Verwendung findet.

2. Vorrichtung für hydroponische Verfahren im Pflanzenbau nach Anspruch 1, dadurch gekennzeichnet, daß der Faservliesstoff ein hydrodynamisch verfestigter Polyesterfaserwirbelvliesstoff mit isotroper Faserlage ist.

3. Vorrichtung hydroponische Verfahren im Pflanzenbau nach Anspruch 1 und 2, dadurch gekennzeichnet, daß der Faservliesstoff ein Viskosefaservliesstoff ist.

4. Vorrichtung für hydroponische Verfahren im Pflanzenbau nach Anspruch 1 bis 3, dadurch gekennzeichnet, daß der Faservliesstoff durch Fasern in einer Länge von 10 bis 58 mm gebildet wird.

5. Vorrichtung nach Anspruch 1 bis 4, dadurch gekennzeichnet, daß der Faservliesstoff dunkel eingefärbt sein kann.

6. Vorrichtung für hydroponische Verfahren im Pflanzenbau nach Anspruch 5, dadurch gekennzeichnet, daß der Faservliesstoff vorzugsweise schwarz gefärbt ist.

## Claims

1. Device for hydroponics processes in plant culture comprising textile fleece-like/non woven material, characterised by using a fibre fleece strengthened without chemical bonding agent as plant habitat. This material should have: a mass per unit area of 30-90 g/m², a sinking time of 6-10 s, a tensile strength of 25-150 N, a fibre size of 0.15-0.38 tex, a liquids storage capacity of 0.8-2.5 l/m² and a water transport value of 35-90 gmm.

2. Device for hydroponic processes in plant culture according to demand 1, with the characteristic that the fibre fleece is a hydroponically strengthened polyester fibre with isotopic fibre position.

3. Device for hydroponic processes in plant culture according to demands 1 and 2, with a viscose fibre fleece.

4. Device for hydroponic processes in plant culture according to demands 1 to 3, with a fibre fleece formed from fibres with a length of 10-58 mm.

5. Device according to demands 1 to 4, with a fibre fleece which can be coloured dark.

6. Device for hydroponic processes in plant culture according to demand 5, with a fibre fleece which is coloured preferably black.

## Revendications

1. Dispositif destiné aux procédés hydroponiques appliqué dans l'horticulture, se composant d'un matériel textile membraneux, se caracterisant par l'emploi comme substrat d'un matériel membraneux de fibres renforcé sans fixateurs chimiques, d'une masse par unité de surface de 30 à 90 g/m², d'une durée d'immersion de 6 à 10 s., d'un coefficient de rupture de 25 à 150 N, d'une finesse des fibres de 0,15 à 0,38 tex, d'une capacité de stockage de liquide de 0,8 à 2,5 l/m² et d'une valeur de transport d'eau de 35 à 90 gmm.

2. Dispositif destiné aux procédés hydroponiques appliqué dans l'horticulture selon la conclusion 1, se caractérisant par le fait que le matériel membraneux en fibres est un matériel membraneux fluidisé en fibres de polyester renforcé de façon hydrodynamique avec une structure isotrope de fibres.

3. Dispositif destiné aux procédés hydroponiques appliqué dans l'horticulture selon les conclusions 1 et 2, se caractérisant par le fait que le matériel membraneux en fibres est un matériel membraneux en fibres de viscose.

4. Dispositif destiné aux procédés hydroponiques appliqué dans l'horticulture selon les conclusions 1 à 3, se caractérisant par le fait que le matériel membraneux en fibres se compose de fibres d'une longueur de 10 à 58 mm.

5. Dispositif selon les conclusions 1 à.4, se caractérisant par le fait que le matériel membraneux en fibres peut être peint en couleur foncée.

6. Dispositif destiné aux procédés hydroponiques appliqué dans l'horticulture selon la conclusion 5, se caractérisant par le fait que le matériel membraneux en fibres est peint de préférence en noir.
